# EUROPEAN PATENT SPECIFICATION

(11) **EP 4 599 161 B1**
(45) Date of publication and mention of the grant of the patent: **09.09.2026**
(21) Application number: 23793891.5
(22) Date of filing: 24.10.2023
(51) Int. Cl.: F03D 80/60, F03D 80/80

(54) **WIND TURBINE AND METHOD FOR CONSTRUCTING A WIND TURBINE**
WINDENERGIEANLAGE UND VERFAHREN ZUM BAU EINER WINDENERGIEANLAGE
ÉOLIENNE ET PROCÉDÉ DE CONSTRUCTION D'UNE ÉOLIENNE

(30) Priority: 16.12.2022 EP 22214191
(43) Date of publication of application: 13.08.2025
(73) Proprietor: Siemens Gamesa Renewable Energy A/S, 7330 Brande (DK)
(72) Inventor: JENSEN, Morten Lauridsen, 8200 Aarhus N (DK); SANDBORG, Nicolai Sebastian Risom, 7500 Holstrebro (DK)
(74) Representative: SGRE-Association
(86) International application number: PCT/EP2023/079646
(87) International publication number: WO 2024/125866

(56) References cited:
- EP-A1- 3 382 199
- CN-B- 104 179 641
- US-A1- 2013 300 227
- US-A1- 2015 372 565
- US-A1- 2019 277 263

## Description

The invention concerns a wind turbine comprising a first cover delimiting an elevated pressure area, pressurization means for increasing the pressure in the elevated pressure area and a generator with a stator and an external rotor, wherein the stator is mounted in a fixed position with respect to the first cover and wherein the stator comprises at least one inflow opening that is open to the elevated pressure area, therefore allowing air from the elevated pressure area to flow into the stator to cool the generator. Additionally, the invention concerns a method for constructing a wind turbine.

Within increasing efficiency and power density in wind turbines, effective ways of cooling the components of the generator become increasingly relevant. One advantageous approach for cooling is to have cooling channels in the stator of the generator, wherein an increased pressure on one side of the channel is used to push air through these channels. Depending on the channel geometry and the desired air flow, it can be sufficient to have a relatively low pressure increase, e.g. by only 10 millibar to 100 millibar or by only a few 100 millibar. It is however also possible, to use larger pressures, e.g., several bars, to push air through the cooling channels. Depending on the desired pressure, it can be sufficient to, e.g., use multiple fans as pressurization means. At higher pressure increases the use of compresses can be advantageous. The pressurization means can be driven by an electric motor or, e.g., directly by the rotor of the wind turbine.

To achieve sufficient cooling of the stator, it can be advantageous to use multiple cooling channels. Typically, separate connections, e.g., ducts or pipes, are necessary to feed the air to each of the cooling channels. The use of direct cooling with multiple cooling channels therefore adds to the weight of components installed on top of a tower and can require notable amounts of installation space. Background art showing cooling arrangements of wind turbine stators can be found in for instance EP 3 382 199 A1 and US 2019/277263 A1.

The invention is therefore based on the problem to provide a simplified approach for direct cooling, especially allowing for a lower complexity of the cooling system and therefore a lower cost, weight and/or required installation space.

The problem is solved by the initially discussed wind turbine, wherein a second cover that is attached to the stator or a hollow section of the stator extends axially into a receiving opening of the first cover, wherein a sealing means is arranged between the first cover and either the second cover or the hollow section to seal the elevated pressure area, wherein the rotational axis of the external rotor extends through the elevated pressure area, wherein the inflow opening is arranged at a smaller distance from the rotational axis than the second cover or the hollow section.

By using the second cover or hollow section in conjunction with the sealing means, the elevated pressure area can extend directly to the inflow opening or openings of the stator. A separate piping to enclose the elevated pressure area is not required. This is especially advantageous when a rather large opening, e.g., a central inflow opening of the stator, and/or a multitude of inflow openings, e.g., of cooling channels distributed along the circumferential direction of the stator, are used.

The second cover can, e.g., be formed from metal or from plastic, especially from reinforced plastic. Preferably, there is no contact between the rotor and the second cover during normal operation. Therefore, relatively low-cost materials can be used for the second cover. In some cases, it might however be advantageous to use the second cover as a stop for the rotor in extreme operating conditions or to use the second cover as a bearing or attach a bearing to the second cover. In these use cases, it can be advantageous to use higher strength materials for the second cover.

The Young's modulus of the sealing means can be smaller than the Young's modulus of the first cover and/or of the second cover or the hollow section by at least a factor of 2 or 5 or 10. This allows for a clamping of the sealing means between the first cover and the second cover or the hollow section essentially without any deformation of the clamping components.

Preferably, there is no contact between the sealing means and the rotor or other components that are moved with respect to the first cover during the normal operation of the wind turbine. This can increase the lifetime of the sealing means over the use of sealing means that are arranged between parts with a relative movement, e.g., between the first cover and the rotor.

The first cover can especially extend beyond the sealing means up to close proximity of the rotor. A further cover attached to the rotor can then essentially close the area comprising the sealing means, leaving only a small gap to the first cover and therefore protecting the sealing means from weather and other external influences that might increase wear and tear and therefore reduce the lifetime of the sealing means.

The pressurization means could in principle be or comprise a compressor, e.g., to allow for relatively high pressures, e.g., one or multiple bars above the atmospheric pressure, in the elevated pressure area. It was however found that a relatively low increase in pressure in the elevated pressure area, e.g., of a few 10 millibar, e.g., 20 millibar to 200 millibar, or a few 100 millibar, e.g., 200 millibar to 2 bar, can allow for a sufficient air flow through the generator when using the inventive design of the wind turbine. The pressurization means can therefore, e.g., be fans that push additional air from the area surrounding the wind turbine into the elevated pressure area.

It can be advantageous to draw air from a relatively protected area, e.g., from the bottom side of a nacelle of the wind turbine. In the wind turbine according to the present invention a relatively large elevated pressure area can be used, e.g., the complete interior of a nacelle.

Additional means for filtering and/or drying the provided air can be used in conjunction with the pressurization means to avoid or at least reduce the introduction of particles and/or fluids into the generator, e.g., into cooling channels.

The rotational axis is typically a virtual axis and therefore preferably no axle extends through the elevated pressure area. The external rotor can be arranged around the outer circumference of the stator and be pivot mounted with respect to the stator.

In this document directions are defined with respect to the rotational axis. The axial direction is parallel to the rotational axis and a local coordinate system is defined by the radial and circumferential direction with reference to the rotational axis.

When a connection of components to each other or an attachment is discussed, any approach of connecting components, especially in the context of wind turbines, can be used, e.g. connections by bolting, gluing, screw connections, etc.

The sealing means can be formed by a flap formed from an elastic material, especially rubber, wherein the flap is either attached to the first cover and elastically bent in the axial direction from an initial state by the second cover or the hollow section or wherein the flap is attached to the second cover or the hollow section and elastically bent in the axial direction from an initial state by the first cover.

The elasticity of the flap and therefore the restoring force pushes the flap radially against the component it is not attached to, therefore allowing for a quite good sealing of the elevated pressure area.

The use of rubber or similar materials can be advantageous, since these elastic materials can have a long lifetime. Ideally the material and other means for protecting the sealing means are chosen in such a way that a lifetime of approximately 30 years can be achieved for the sealing means. At the end of such a time span it is typically necessary anyway to perform major servicing and/or refurbishing of the wind turbine and the use of the seal does therefore not or at least hardly increase the service requirements of the wind turbine.

The flap can especially be approximately ring-shaped. The flap can be attached to either the first cover or to the second cover or hollow section prior to the assembly of the wind turbine, especially prior to an assembly step that includes inserting the second cover or the hollow section into the receiving opening.

When the flap is attached to the first cover and the inner diameter of the flap in its initial state is lower than the outer diameter of the second cover or hollow section, the insertion of the second cover or hollow section into the receiving opening deforms the flap and therefore provides a prestressing that improves the sealing of the gap between the first cover and the second cover or the hollow section. The same effect can be achieved when the flap is attached to the second cover or the hollow section and the outer diameter of the flap in its initial state is larger than the diameter of the receiving opening.

The stator can comprise a stator plate on its axial end facing away from a hub carrying rotor blades of the wind turbine, wherein at least one inflow opening is formed by a respective hole in the stator plate. Additionally or alternatively, the second cover can be attached to the stator plate. The stator plate can, e.g., be used for mounting the stator to other components. By using holes in the stator plate facing away from the hub as inflow openings, it is, e.g., possible to use the whole interior space of a nacelle adjacent to the stator plate as elevated pressure area.

The first cover can be the canopy of a nacelle of the wind turbine. In this case it is, e.g., possible to draw air through the floor of the nacelle and/or to use the interior space of the nacelle as elevated pressure area. Cool air can be fed to any openings of the stator that are open to the interior space of the nacelle. It is therefore easily possible to feed a multitude of cooling channels of the stator with low technical complexity.

The stator, especially the stator plate, can additionally comprise at least one outflow opening, through which air that entered the stator from the inflow opening or at least one of the inflow openings can pass out of the wind turbine, wherein the respective outflow opening is coupled to a respective duct that extends from the outflow opening to an outer surface of the wind turbine, especially to an outer surface formed by the first cover.

By this design air that is heated during the cooling of the generator can be fed out of the wind turbine in a controlled manner. At the same time a built up of counter pressure that would reduce the cooling efficiency can be avoided. Since the ducts can be directly fed to the outer surface, a relatively low amount of plumbing is necessary for the described arrangement.

It is especially preferred, when the number of outflow openings and therefore ducts is lower than the number of inflow openings, e.g., by merging cooling channels fed by multiple inflow openings into a single outflow opening, since inflow openings do not require any additional ducts or plumbing in the wind turbine according to the present invention.

The outflow opening can be arranged radially within the second cover or the hollow section, wherein the respective duct extends through the elevated pressure area and is designed to separate air flowing from the respective outflow opening from air within the elevated pressure area. This can, e.g., be advantageous to provide a free space outside of the second cover or the hollow section that can, e.g., be used for a rotor brake.

The wind turbine can comprise a further cover that is formed by or attached to the rotor and that overlaps an end section of the first cover in the axial direction and that is arranged radially outside of the end section, wherein the end section comprises the receiving opening. By using the further cover, the sealing means can be well protected from weather and other external influences.

The further cover is preferably ring-shaped with an additional end wall at the end facing away from the stator. The end wall can extend radially towards the first cover, leaving a relatively small gap.

The first cover can form a flange surrounding the receiving opening. The flange can especially be arranged in close proximity to a side wall of the rotor, leaving only a small gap. Especially in conjunction with an end wall of the further cover extending towards the first cover, a labyrinth seal can result that provides improved protection of the sealing means from weather and other external influences.

The second cover or the hollow section can pass through a rotor opening in an axial side wall of the rotor, wherein an axial section of the second cover or of the hollow section on the side of the axial side wall facing away from the stator can have a diameter that is larger than the rotor opening.

Preferably, the second cover or hollow section widens immediately outside of the hole, especially having a cover wall that is running approximately in parallel to the side wall of the rotor. This arrangement can be considered to be an additional labyrinth seal that further reduces the introduction of dirt and fluids into the interior space of the rotor.

The part of the second cover or the hollow section that is arranged within the rotor can in principle also have a wider diameter than the rotor opening. It can however be advantageous to keep the diameter of the second cover or the hollow section smaller than the diameter of the rotor opening within the rotor to avoid installation space conflicts, e.g., with a rotor brake.

The stator can especially comprise at least one hollow interior space delimited by two stator plates at its axial ends. A stator body, that can especially be formed from multiple segments, can be arranged along the outer circumference of the stator plates and connect the stator plates. The stator plates can have a central opening and be mounted to a central support structure that passes through the respective central opening.

An axial end of the stator facing towards the or a hub carrying rotor blades of the wind turbine can comprise at least one further opening allowing at least some of the air that entered the stator via the inflow opening or at least one of the inflow openings to pass out of the stator and into an air gap arranged radially between an outer surface of the stator and an inner surface of the rotor. This allows for an improved cooling of the parts of the rotor and the stator that are adjacent to the air gap, like, e.g., magnets of the rotor and/or windings of the stator.

The further opening can especially be formed by a further stator plate forming that end of the stator and delimiting an interior space of the stator. The air flow can pass along the end of the stator, especially along the further stator plate, before entering the air gap and can therefore especially cool the coil ends of a stator winding.

The second cover can comprise a cover opening, connecting the elevated pressure area to an interior space of the rotor to allow air to flow from the elevated pressure area to the or an air gap arranged radially between an outer surface of the stator and an inner surface of the rotor. This can provide an additional or alternative way to cool components adjacent to the air gap. The air can flow along the stator plate before entering the air gap and can therefore especially cool the coil ends of a stator winding.

The stator, especially a stator body forming the or a radially outer surface of the stator, can comprise at least one radial opening that that is connected the outflow opening or at least one of the outflow openings to allow air to exit the air gap via the radial opening and the outflow opening. This feature is especially useful, when air is fed to the air gap via both axial ends, since the air can then be removed from the air gap via the radial opening while further cooling the stator body.

The stator can comprise at least one fan for moving air from the radial opening or at least one of the radial openings to the outflow opening or at least one of the outflow openings. The use of a fan allows for a large airflow in the air gap, while keeping the pressure in the air gap relatively low.

Additionally or alternatively, the stator can comprise at least one braking means, which is preferably mounted to the stator plate, wherein the braking means is designed to frictionally contact at least one surface of the rotor, preferably of a brake disk of the rotor, when the braking means is actuated. It is, e.g., possible to form the previously discussed side wall of the rotor by a brake disc. The braking means can, e.g., have a clamp-like structure, for clamping the radially interior section of the brake disc.

In some use cases it can be desirable to have both the braking means and the second cover extending through the opening in the side wall of the rotor. Typically, it is advantageous to leave only a small gap between the second cover and the radially inner surface of the side wall. The braking means is however advantageously arranged between the side wall and the second cover in the radial direction. To minimize the distance between the inner surface of the side wall and the second cover in angular segments, in which no braking means is present, the radial position of the second cover can be drawn closer to the rotational axis in radial segments comprising the braking means then in radial segments without braking means.

Besides the wind turbine the invention also concerns a method for constructing a wind turbine, comprising the steps:
- providing a generator with a stator and an external rotor, and a first cover with a receiving opening, wherein a sealing means that is formed by a flap formed from an elastic material, especially rubber, is on the one hand attached to the first cover or on the other hand attached to a second cover, which is in turn attached to the stator, or attached to a hollow section of the stator,
- arranging the stator in a fixed position with respect to the first cover by inserting an open end of the second cover or of the hollow section into a receiving opening of the first cover, thereby elastically bending the flap in the axial direction and forming an elevated pressure area delimited by the first cover and either the second cover or the hollow section,
- mounting a hub for carrying rotor blades of the wind turbine to the rotor, and
- mounting rotor blades to the hub.

After the first step the further steps can be performed in any order. The method can especially be used for constructing a wind turbine according to the present invention. Additionally or alternatively, any features discussed with respect to the wind turbine can also be introduced to the method with the advantages given above and vice versa.

The cover and stator can especially be mounted to a carrying structure, e.g., a carrying structure of a nacelle. The discussed components can especially be arranged on top of a tower.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a detailed view of an exemplary embodiment of the wind turbine according to the present invention,
- Fig. 2: an intermediate step in an exemplary embodiment of the method for constructing a wind turbine according to the present invention,
- Fig. 3: a detailed view of an exemplary embodiment of the wind turbine according to the present invention resulting from a construction according to fig. 2,
- Fig. 4: an intermediate step in a further exemplary embodiment of the method for constructing a wind turbine according to the present invention,
- Fig. 5: a detailed view of an exemplary embodiment of the wind turbine according to the present invention resulting from a construction according to fig. 4, and
- Fig. 6: a detailed view of a further exemplary embodiment of the wind turbine according to the present invention.

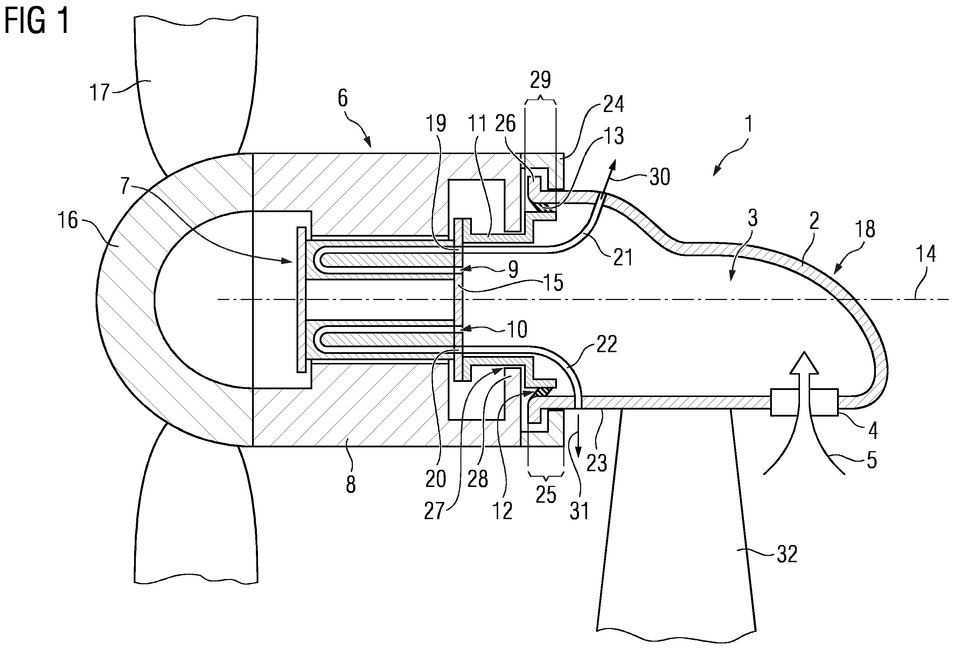

Fig. 1 shows a wind turbine 1 having a first cover 2, which forms the housing of a nacelle 18 in the given example, and a generator 6 with a stator 7 and a rotor 8 that is connected to a hub 16 carrying blades 17 of the wind turbine 1. In the example the discussed components are mounted on top of a tower 32. An internal support structure for mounting the stator 7, the cover 2 and various other components is not shown in the interest of clarity and simplicity.

The stator 7 and therefore the generator 6 is cooled using a direct cooling approach, wherein air is introduced into the stator 7 via inflow openings 9, 10 and exits the stator via outflow openings 19, 20. To achieve an even and efficient cooling, it is advantageous to use a multitude of inflow openings 9, 10 spaced along the circumferential direction of the stator 7. Feeding air individually to each of these openings 9, 10 would require a rather elaborate piping. Therefore, a different approach is used in the wind turbine 1 to feed air to the inflow openings 9, 10.

In the wind turbine 1 a common, rather large elevated pressure area 3 is used to feed air to all of the inflow openings 9, 10. This is achieved by mounting the stator 7 in a fixed position with respect to the first cover 2 and using a second cover 11 that is attached to the stator 7 or more specifically to the stator plate 15 in the example and that extends axially into a receiving opening 12 of the first cover 2. A sealing means 13 is arranged between the first cover 2 and the second cover 11 to seal the elevated pressure area 3.

In the example air is sucked into the elevated pressure area 3 via pressurization means 4, as shown by the arrow 5, from an area below the nacelle 18. This is advantageous, since this area is to certain degree protected from weather and the drawn air is therefore already relatively dry. Additional means (not shown) for filtering and/or drying the air are preferably used in conjunction with the pressurization means 4.

Since air is drawn in over a relatively large area in the example and since the main limitation of the air flow is caused by the diameter of the cooling channels running through the stator 7, it can be sufficient to use fans or other relatively simple pressurization means 4. In principle it would however also be possible to use a compressor to elevate the pressure in the elevated pressure area 3 even further when a stronger cooling is required for the stator 7.

With the discussed approach, a large elevated pressure area 3 that extends across the rotational axis 14 of the rotor 8 is formed. Separate ducts or pipes to feed the inflow openings 9, 10 are not required, therefore reducing the weight and cost of the wind turbine 1 and potentially freeing installation space within the nacelle 18 for other components.

In the example the second cover 11 is formed as a separate part from the stator 7 that can be connected to the stator 7, e.g., by bolting, screwing or gluing it to the stator 7, in the example specifically to the stator plate 15. In an alternate embodiment it would however also be possible to use a hollow section of the stator 7 itself that extends into the receiving opening 12 instead of the second cover 11.

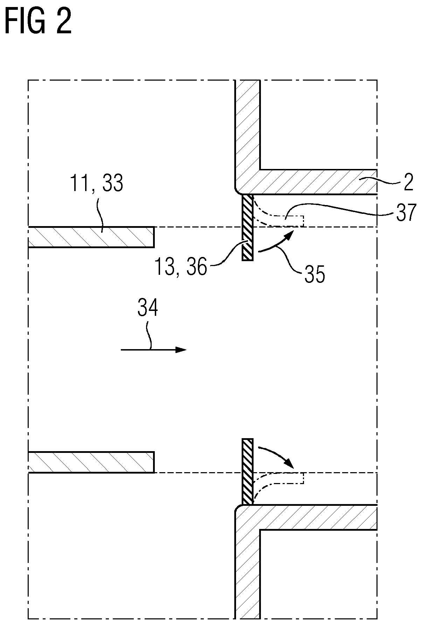

In the example the sealing means 13 is formed by a flap formed from an elastic material, e.g., rubber. Advantages of this design will be discussed with additional reference to fig. 2 that shows an intermediate state of a method for constructing the wind turbine 1. Only a small relevant section is shown, comprising on the one hand the ends of the second cover 11 or a hollow section 33 of the stator 7 facing away from the hub 16 and on the other hand the ends of the first cover 2 forming the receiving opening 12.

In the example according to fig. 1 and 2, the sealing means 13 is already attached, e.g., glued, bolted or screwed, to the first cover 2 before the second cover 11 or the hollow section 33 is introduced into the receiving opening 12 as indicated in fig. 2 by the arrow 34. In its initial state 36 the flap forming the sealing means 13 is approximately ring-shaped, wherein the inner circumference of the flap is smaller than the outer circumference of the second cover 11 or the hollow section 33.

When the second cover 11 or hollow section 33 is introduced into the receiving opening 12, the flap is bent from its initial state 36 to its final state 37 as shown by the arrows 35. In the final state 37, the elasticity of the flap creates a restoring force pushing the flap against the outer surface of the second cover 11 or the hollow section 33, therefore ensuring a quite tight sealing of the elevated pressure area 3.

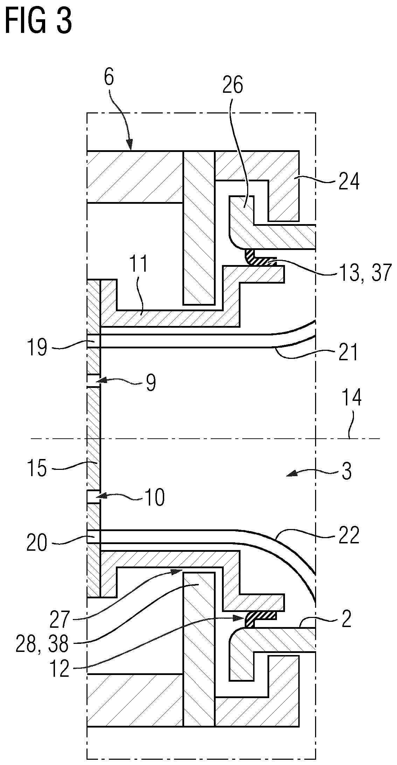

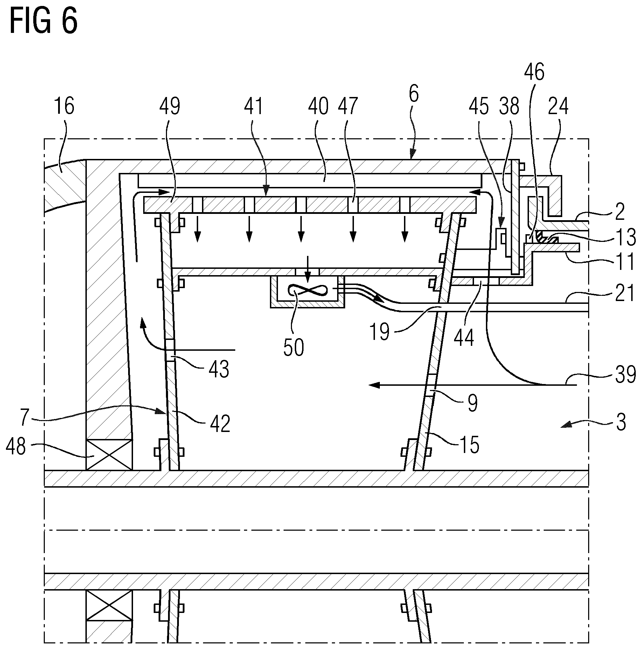

Fig. 3 shows a detailed view of the wind turbine resulting from a construction according to fig. 2. Besides the explicit visualization of the final state 37 of the sealing means 13, the only modification compared to the wind turbine 1 shown in fig. 1 is the use of a separate component, namely the brake disk 38, to form the side wall 28 of the rotor 7. The use of such a brake disc 38 will be discussed later with reference to fig. 6.

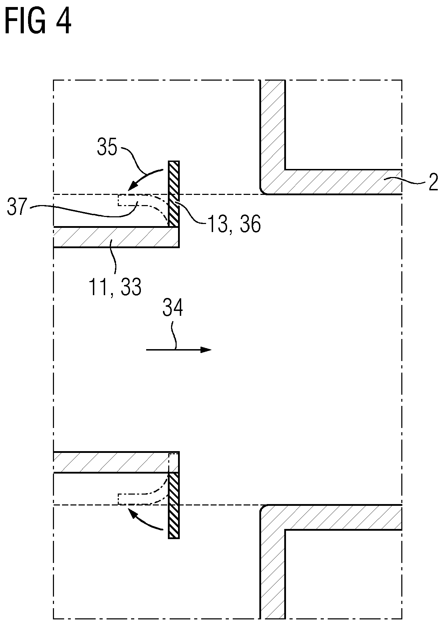

Fig. 4 shows the same step in a slightly modified method for constructing a slightly modified wind turbine 1. In this case the sealing means 13 is attached to the second cover 11 or the hollow section 33. The sealing means 13 is formed by a ring-shaped flap that extends to an outer diameter that is larger than the diameter of the receiving opening 12. Therefore, the flap is bent from the initial state 36 to the final state 37 as shown by the arrows 35 in fig. 4 and the restoring force that is caused by the elasticity of the flap pushes the sealing means 13 against the inner surface of the first cover 2, therefore ensuring a quite tight sealing of the elevated pressure area 3, as discussed above.

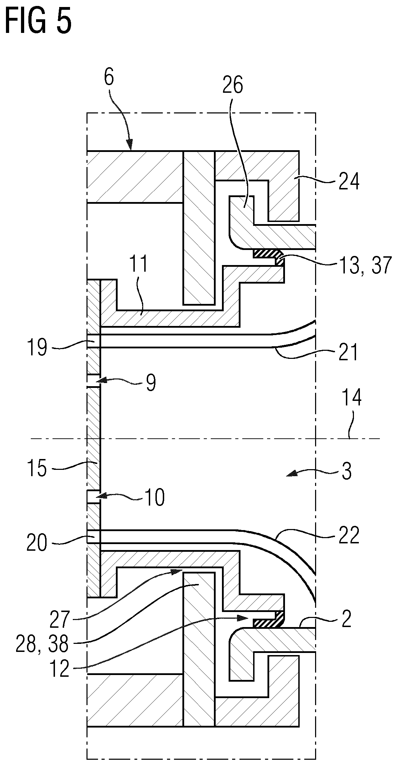

Fig. 5 shows a detailed view of the wind turbine resulting from a construction according to fig. 4. Besides the different shape and positioning of the sealing means 13 in its final state 37, the wind turbine shown in fig. 5 is identical to the wind turbine shown in fig. 3.

Returning to fig. 1, the stator 7, or more specifically the stator plate 15 used in the example, additionally comprises the outflow openings 19, 20, through which air that entered the stator from the inflow openings 9, 10 can pass out of the wind turbine. To allow for a controlled removal of the air, which was heated by cooling the stator 7, as shown by the arrows 30, 31, ducts 21, 22 can be used to keep that air separate from the air in the elevated pressure area 3 and to feed the air to an outer surface 23 of the wind turbine 1 or more specifically of the first cover 2.

In principle the outflow openings 19, 20 could alternatively be arranged at a larger radius than the second cover 11, therefore allowing a direct discharge of the air outside of the elevated pressure area 3. It was however found that in these cases it would still typically be necessary to use some kind of duct to avoid a heating of the rotor 8 by the air that has passed through the stator 7. In most use cases feeding the ducts 21 through the high-pressure area 3 is therefore advantageous, since an installation space conflict with components inside the rotor, e.g., with a rotor brake can be avoided.

To ensure a long lifetime of the sealing means 13, the sealing means 13 is protected from weather and other outside influences in fig. 1 by a combination a flange 26 of the first cover 2 surrounding the receiving opening 12 and a further cover 24 that is attached to the rotor 8 and overlaps an end section 25 of the first cover 2 and more specifically the flange 26. The resulting arrangement shown in fig. 1 can be considered as a labyrinth seal and therefore allows to strongly limit the amount of fluid and/or dirt introduced in the area of the sealing means 13 without requiring a frictional contact between the first cover 2 and rotating components.

In fig. 1 the second cover 11 widens in an axial section 29 after passing through a rotor opening 27 in an axial side wall 28 of the rotor. With this arrangement a kind of labyrinth seal can also be formed between the area of the seal 13 and an interior space of the rotor, therefore further limiting the amount of fluid and dirt that can be introduced via the gap between the further cover 24 and the first cover 2 and the gap between the side wall 28 and the second cover 11 into the interior of the rotor 8 and/or into the area of the stator 7.

Fig. 6 shows a detailed view of a further wind turbine that uses a modified air flow compared to the example shown in fig. 1 to allow for an improved cooling of components close to the air gap 41, e.g., of the magnets 40 off the rotor 6 and of stator windings (not shown). Since most of the relevant features where already discussed in the previous examples, the following discussion will focus on some key differences of the implementation shown in fig. 6 with respect to fig. 1 and some implementation details, that where not shown or discussed in the previous examples.

In fig. 6 two distinct pathways are used to feed air to the air gap 41, which are illustrated by the arrows 39. To provide the first pathway, the axial end of the stator 7 facing towards the hub comprises further openings 43 allowing at least some of the air that entered the stator 7 via the inflow opening 9, 10 to pass out of the stator 7 and into the air gap 41. The further openings 43 are formed by a further stator plate 42 in the example.

To provide the second pathway, the second cover 11 comprises a cover opening 44, connecting the elevated pressure area 3 to an interior space of the rotor 6 to allow air to flow from the elevated pressure area 3 to the air gap 41.

Since air is fed to the air gap 41 from both axial ends of the stator, the stator body 49 that forms the radially outer surface of the stator 7 comprises radial openings 47 that are connected the outflow opening 19, to allow air to exit the air gap 41 via the radial openings 47 and the outflow opening 19. A fan 50 is used to draw the air inwards and to expel it via the duct 22.

In the exemplary embodiment only a single bearing 48 at the distal end of the rotor is used to support the rotor. In alternate embodiments it would also be possible to, e.g., use bearings on both ends of the rotor.

The stator comprises a braking means 45, which is mounted to the stator plate 15 in the example according to fig. 6. The braking means 45 is designed to frictionally contact the brake disk 38 of the rotor, when the braking means 45 is actuated. As shown schematically in fig. 6, a part 46 of the braking means can extend beyond the brake disc 38, e.g., to clamp the brake disc 38 from both sides, when the braking means 4 is actuated. This can lead to an overlap of the second cover 11 and the braking means 45 in the circumferential direction. In fig. 6, a part of the braking means 45 is therefore hidden behind the second cover 11. The shape of the second cover 11 can therefore be chosen to accommodate the presence of the braking means 45, e.g., by providing a cavity for housing part of the braking means 45.

Although the present invention has been described in detail with reference to the preferred embodiment, the present invention is not limited by the disclosed examples from which the skilled person is able to derive other variations without departing from the scope of the invention.

## Claims

1. Wind turbine comprising a first cover (2) delimiting an elevated pressure area (3), pressurization means (4) for increasing the pressure in the elevated pressure area (3) and a generator (6) with a stator (7) and an external rotor (8), wherein the stator (7) is mounted in a fixed position with respect to the first cover (2) and wherein the stator (7) comprises at least one inflow opening (9, 10) that is open to the elevated pressure area (3), therefore allowing air from the elevated pressure area (3) to flow into the stator (7) to cool the generator (6), **characterized in that** a second cover (11) that is attached to the stator (7), or a hollow section (33) of the stator (7), extends axially into a receiving opening (12) of the first cover (2), wherein a sealing means (13) is arranged between the first cover (2) and either the second cover (11) or the hollow section (33) to seal the elevated pressure area (3), wherein the rotational axis (14) of the external rotor (8) extends through the elevated pressure area (3), wherein the inflow opening (9, 10) is arranged at a smaller distance from the rotational axis (14) than the second cover (2) or the hollow section (33).

2. Wind turbine according to claim 1, **characterized in that** the sealing means (13) is formed by a flap formed from an elastic material, especially rubber, wherein the flap is either attached to the first cover (2) and elastically bent in the axial direction from an initial state (36) by the second cover (11) or the hollow section (33) or wherein the flap is attached to the second cover (11) or the hollow section (33) and elastically bent in the axial direction from an initial state (36) by the first cover (2).

3. Wind turbine according to claim 1 or 2, **characterized in that** the stator (7) comprises a stator plate (15) on its axial end facing away from a hub (16) carrying rotor blades (17) of the wind turbine (1), wherein the at least one inflow opening (9, 10) is formed by a respective hole in the stator plate (15) and/or wherein the second cover (11) is attached to the stator plate (15).

4. Wind turbine according to one of the preceding claims, **characterized in that** the first cover (2) is the canopy of a nacelle (18) of the wind turbine (1).

5. Wind turbine according to one of the preceding claims, **characterized in that** the stator (7), especially the stator plate (15), additionally comprises at least one outflow opening (19, 20), through which air that entered the stator (7) from the inflow opening (9, 10) or at least one of the inflow openings (9, 10) can pass out of the wind turbine (1), wherein the respective outflow opening (19, 20) is coupled to a respective duct (21, 22) that extends from the outflow opening (19, 20) to an outer surface (23) of the wind turbine (1), especially to an outer surface (23) formed by the first cover (2).

6. Wind turbine according to claim 5, **characterized in that** the outflow opening (19, 20) is arranged radially within the second cover (11) or the hollow section (33), wherein the respective duct (21, 22) extends through the elevated pressure area (3) and is designed to separate air flowing from the respective outflow opening (19, 20) from air within the elevated pressure area (3).

7. Wind turbine according to one of the preceding claims, **characterized in that** it comprises a further cover (24) that is formed by or attached to the rotor (8) and that overlaps an end section (25) of the first cover (2) in the axial direction and that is arranged radially outside of the end section (25), wherein the end section (25) comprises the receiving opening (12).

8. Wind turbine according to one of the preceding claims, **characterized in that** the first cover (2) forms a flange (26) surrounding the receiving opening (12).

9. Wind turbine according to one of the preceding claims, **characterized in that** the second cover (11) or the hollow section (33) passes through a rotor opening (27) in an axial side wall (28) of the rotor (8), wherein an axial section (29) of the second cover (11) or of the hollow section (33) on the side of the axial side wall (28) facing away from the stator (7) has a diameter that is larger than the rotor opening (27).

10. Wind turbine according to one of the preceding claims, **characterized in that** an axial end of the stator (7) facing towards the or a hub (16) carrying rotor blades (17) of the wind turbine (1) comprises at least one further opening (43) allowing at least some of the air that entered the stator (7) via the inflow opening (9, 10) or at least one of the inflow openings (9, 10) to pass out of the stator (7) and into an air gap (41) arranged radially between an outer surface of the stator (7) and an inner surface of the rotor (6).

11. Wind turbine according to one of the preceding claims, **characterized in that** the second cover (11) comprises a cover opening (44), connecting the elevated pressure area (3) to an interior space of the rotor (6) to allow air to flow from the elevated pressure area (3) to the or an air gap (41) arranged radially between an outer surface of the stator (7) and an inner surface of the rotor (6).

12. Wind turbine according to claim 10 or 11, **characterized in that** the stator (7), especially a stator body (49) forming the or a radially outer surface of the stator (7), comprises at least one radial opening (47) that is connected the outflow opening (19, 20) or at least one of the outflow openings (19, 20) to allow air to exit the air gap (41) via the radial opening (47) and the outflow opening (19, 20).

13. Wind turbine according to one of the preceding claims, **characterized in that** the stator comprises on the one hand at least one braking means (45), which is preferably mounted to the stator plate (15), wherein the braking means (45) is designed to frictionally contact at least one surface of the rotor (6), preferably of a brake disk (38) of the rotor, when the braking means (45) is actuated, and/or on the other hand at least one fan (50) for moving air from the radial opening (47) or at least one of the radial openings (47) to the outflow opening (19, 20) or at least one of the outflow openings (19, 20).

14. Method for constructing a wind turbine (1), comprising the steps:
- providing a generator (6) with a stator (7) and an external rotor (8), and a first cover (2) with a receiving opening (12), wherein a sealing means (13) that is formed by a flap formed from an elastic material, especially rubber, is on the one hand attached to the first cover (2) or on the other hand attached to a second cover (11), which is in turn attached to the stator (7), or attached to a hollow section (33) of the stator (7),
- arranging the stator (7) in a fixed position with respect to the first cover (2) by inserting an open end of the second cover (11) or of the hollow section (33) into a receiving opening (12) of the first cover (2), thereby elastically bending the flap in the axial direction and forming an elevated pressure area (3) delimited by the first cover (2) and either the second cover (11) or the hollow section (33),
- mounting a hub (16) for carrying rotor blades (17) of the wind turbine (1) to the rotor (8), and
- mounting rotor blades (17) to the hub (16).

## Patentansprüche

1. Windenergieanlage, umfassend eine erste Abdeckung (2), die einen Bereich (3) mit erhöhtem Druck begrenzt, ein Druckbeaufschlagungsmittel (4) zum Erhöhen des Drucks in dem Bereich (3) mit erhöhtem Druck und einen Generator (6) mit einem Stator (7) und einem Außenrotor (8), wobei der Stator (7) in Bezug auf die erste Abdeckung (2) in einer festen Position montiert ist und wobei der Stator (7) mindestens eine Einlassöffnung (9, 10) umfasst, die zu dem Bereich (3) mit erhöhtem Druck offen ist, wodurch ermöglicht wird, dass Luft aus dem Bereich (3) mit erhöhtem Druck in den Stator (7) strömt, um den Generator (6) zu kühlen, **dadurch gekennzeichnet, dass** sich eine zweite Abdeckung (11), die an dem Stator (7) oder einem Hohlabschnitt (33) des Stators (7) angebracht ist, axial in eine Aufnahmeöffnung (12) der ersten Abdeckung (2) erstreckt, wobei zwischen der ersten Abdeckung (2) und entweder der zweiten Abdeckung (11) oder dem Hohlabschnitt (33) ein Dichtungsmittel (13) angeordnet ist, um den Bereich (3) mit erhöhtem Druck abzudichten, wobei sich die Drehachse (14) des Außenrotors (8) durch den Bereich (3) mit erhöhtem Druck erstreckt, wobei die Einlassöffnung (9, 10) in einem kleineren Abstand von der Drehachse (14) angeordnet ist als die zweite Abdeckung (2) oder der Hohlabschnitt (33).

2. Windenergieanlage nach Anspruch 1, **dadurch gekennzeichnet, dass** das Dichtungsmittel (13) durch eine Klappe gebildet ist, die aus einem elastischen Material, insbesondere Gummi, gebildet ist, wobei die Klappe entweder an der ersten Abdeckung (2) angebracht ist und aus einem Ausgangszustand (36) durch die zweite Abdeckung (11) oder den Hohlabschnitt (33) in der axialen Richtung elastisch gebogen ist oder wobei die Klappe an der zweiten Abdeckung (11) oder dem Hohlabschnitt (33) angebracht ist und aus einem Ausgangszustand (36) durch die erste Abdeckung (2) in der axialen Richtung elastisch gebogen ist.

3. Windenergieanlage nach Anspruch 1 oder 2, **dadurch gekennzeichnet, dass** der Stator (7) eine Statorplatte (15) an dessen axialem Ende umfasst, das von einer Nabe (16), die Rotorschaufeln (17) der Windenergieanlage (1) trägt, abgewandt ist, wobei die mindestens eine Einlassöffnung (9, 10) durch ein jeweiliges Loch in der Statorplatte (15) gebildet ist und/oder wobei die zweite Abdeckung (11) an der Statorplatte (15) angebracht ist.

4. Windenergieanlage nach einem der vorhergehenden Ansprüche, **dadurch gekennzeichnet, dass** die erste Abdeckung (2) die Überdachung einer Gondel (18) der Windenergieanlage (1) ist.

5. Windenergieanlage nach einem der vorhergehenden Ansprüche, **dadurch gekennzeichnet, dass** der Stator (7), insbesondere die Statorplatte (15), zusätzlich mindestens eine Auslassöffnung (19, 20) umfasst, durch die Luft, die von der Einlassöffnung (9, 10) oder mindestens einer der Einlassöffnungen (9, 10) in den Stator (7) eingetreten ist, aus der Windenergieanlage (1) austreten kann, wobei die jeweilige Auslassöffnung (19, 20) mit einer jeweiligen Leitung (21, 22) gekoppelt ist, die sich von der Auslassöffnung (19, 20) zu einer Außenfläche (23) der Windenergieanlage (1), insbesondere zu einer Außenfläche (23), die durch die erste Abdeckung (2) gebildet ist, erstreckt.

6. Windenergieanlage nach Anspruch 5, **dadurch gekennzeichnet, dass** die Auslassöffnung (19, 20) radial innerhalb der zweiten Abdeckung (11) oder des Hohlabschnitts (33) angeordnet ist, wobei sich die jeweilige Leitung (21, 22) durch den Bereich (3) mit erhöhtem Druck erstreckt und dazu ausgestaltet ist, Luft, die aus der jeweiligen Auslassöffnung (19, 20) strömt, von Luft innerhalb des Bereichs (3) mit erhöhtem Druck zu trennen.

7. Windenergieanlage nach einem der vorhergehenden Ansprüche, **dadurch gekennzeichnet, dass** sie eine weitere Abdeckung (24) umfasst, die durch den Rotor (8) gebildet oder an diesem angebracht ist und die einen Endabschnitt (25) der ersten Abdeckung (2) in der axialen Richtung überlappt und die radial außerhalb des Endabschnitts (25) angeordnet ist, wobei der Endabschnitt (25) die Aufnahmeöffnung (12) umfasst.

8. Windenergieanlage nach einem der vorhergehenden Ansprüche, **dadurch gekennzeichnet, dass** die erste Abdeckung (2) einen Flansch (26) bildet, der die Aufnahmeöffnung (12) umgibt.

9. Windenergieanlage nach einem der vorhergehenden Ansprüche, **dadurch gekennzeichnet, dass** die zweite Abdeckung (11) oder der Hohlabschnitt (33) durch eine Rotoröffnung (27) in einer axialen Seitenwand (28) des Rotors (8) verläuft, wobei ein axialer Abschnitt (29) der zweiten Abdeckung (11) oder des Hohlabschnitts (33) auf der Seite der axialen Seitenwand (28), die von dem Stator (7) abgewandt ist, einen Durchmesser aufweist, der größer als die Rotoröffnung (27) ist.

10. Windenergieanlage nach einem der vorhergehenden Ansprüche, **dadurch gekennzeichnet, dass** ein axiales Ende des Stators (7), das der oder einer Nabe (16), die Rotorschaufeln (17) der Windenergieanlage (1) trägt, zugewandt ist, mindestens eine weitere Öffnung (43) umfasst, die mindestens einem Teil der Luft, die über die Einlassöffnung (9, 10) oder die mindestens eine der Einlassöffnungen (9, 10) in den Stator (7) eingetreten ist, ermöglicht, aus dem Stator (7) auszutreten und in einen Luftspalt (41) zu strömen, der radial zwischen einer Außenfläche des Stators (7) und einer Innenfläche des Rotors (6) angeordnet ist.

11. Windenergieanlage nach einem der vorhergehenden Ansprüche, **dadurch gekennzeichnet, dass** die zweite Abdeckung (11) eine Abdeckungsöffnung (44) umfasst, die den Bereich (3) mit erhöhtem Druck mit einem Innenraum des Rotors (6) verbindet, um zu ermöglichen, dass Luft aus dem Bereich (3) mit erhöhtem Druck zu dem oder einem Luftspalt (41) strömt, der radial zwischen einer Außenfläche des Stators (7) und einer Innenfläche des Rotors (6) angeordnet ist.

12. Windenergieanlage nach Anspruch 10 oder 11, **dadurch gekennzeichnet, dass** der Stator (7), insbesondere ein Statorkörper (49), der die oder eine radiale Außenfläche des Stators (7) bildet, mindestens eine radiale Öffnung (47) umfasst, die der Auslassöffnung (19, 20) oder mindestens eine der Auslassöffnungen (19, 20) verbunden ist, um zu ermöglichen, dass Luft über die radiale Öffnung (47) und die Auslassöffnung (19, 20) den Luftspalt (41) verlässt.

13. Windenergieanlage nach einem der vorhergehenden Ansprüche, **dadurch gekennzeichnet, dass** der Stator einerseits mindestens ein Bremsmittel (45), das vorzugsweise an der Statorplatte (15) montiert ist, wobei das Bremsmittel (45) dazu ausgestaltet ist, mindestens eine Fläche des Rotors (6), vorzugsweise von einer Bremsscheibe (38) des Rotors, reibschlüssig zu berühren, wenn das Bremsmittel (45) betätigt wird, und/oder andererseits mindestens ein Gebläse (50) zum Bewegen von Luft aus der radialen Öffnung (47) oder der mindestens einen der radialen Öffnungen (47) zu der Auslassöffnung (19, 20) oder der mindestens einen der Auslassöffnungen (19, 20) umfasst.

14. Verfahren zum Bauen einer Windenergieanlage (1), umfassend die folgenden Schritte:
- Bereitstellen eines Generators (6) mit einem Stator (7) und einem Außenrotor (8) und einer ersten Abdeckung (2) mit einer Aufnahmeöffnung (12), wobei ein Dichtungsmittel (13), das durch eine Klappe gebildet ist, die aus einem elastischen Material, insbesondere Gummi, gebildet ist, einerseits an der ersten Abdeckung (2) oder andererseits an einer zweiten Abdeckung (11) angebracht ist, die wiederum an dem Stator (7) angebracht ist oder an einem Hohlabschnitt (33) des Stators (7) angebracht ist,
- Anordnen des Stators (7) in einer festen Position in Bezug auf die erste Abdeckung (2) durch Einsetzen eines offenen Endes der zweiten Abdeckung (11) oder des Hohlabschnitts (33) in eine Aufnahmeöffnung (12) der ersten Abdeckung (2), wodurch die Klappe elastisch in der axialen Richtung gebogen wird und ein Bereich (3) mit erhöhtem Druck gebildet wird, der durch die erste Abdeckung (2) und entweder die zweite Abdeckung (11) oder den Hohlabschnitt (33) begrenzt ist,
- Montieren einer Nabe (16) zum Tragen von Rotorschaufeln (17) der Windenergieanlage (1) an den Rotor (8) und
- Montieren von Rotorschaufeln (17) an die Nabe (16).

## Revendications

1. Éolienne comprenant un premier capot (2) délimitant une zone de pression élevée (3), des moyens de pressurisation (4) pour augmenter la pression dans la zone de pression élevée (3) et un générateur (6) doté d'un stator (7) et d'un rotor externe (8), dans laquelle le stator (7) est monté en position fixe par rapport au premier capot (2) et dans laquelle le stator (7) comprend au moins une ouverture d'entrée (9, 10) débouchant sur la zone de pression élevée (3), permettant ainsi à l'air provenant de la zone de pression élevée (3) de s'écouler dans le stator (7) afin de refroidir le générateur (6), **caractérisée en ce qu'**un deuxième capot (11) fixé au stator (7), ou une section creuse (33) du stator (7), s'étend axialement dans une ouverture de réception (12) du premier capot (2), un moyen d'étanchéité (13) étant agencé entre le premier capot (2) et soit le deuxième capot (11), soit la section creuse (33) afin d'étanchéifier la zone de pression élevée (3), dans laquelle l'axe de rotation (14) du rotor externe (8) s'étend à travers la zone de pression élevée (3), et dans laquelle l'ouverture d'entrée (9, 10) est agencée à une distance de l'axe de rotation (14) plus petite que le deuxième capot (2) ou la section creuse (33).

2. Éolienne selon la revendication 1, **caractérisée en ce que** le moyen d'étanchéité (13) est constitué par un volet formé d'un matériau élastique, notamment du caoutchouc, le volet étant soit fixé au premier capot (2) et fléchi élastiquement dans la direction axiale depuis un état initial (36) par le deuxième capot (11) ou la section creuse (33), soit fixé au deuxième capot (11) ou à la section creuse (33) et fléchi élastiquement dans la direction axiale depuis un état initial (36) par le premier capot (2).

3. Éolienne selon la revendication 1 ou 2, **caractérisée en ce que** le stator (7) comprend une plaque de stator (15) sur son extrémité axiale orientée à l'opposé d'un moyeu (16) portant des pales de rotor (17) de l'éolienne (1), dans laquelle l'au moins une ouverture d'entrée (9, 10) est formée par un trou respectif ménagé dans la plaque de stator (15) et/ou dans laquelle le deuxième capot (11) est fixé à la plaque de stator (15).

4. Éolienne selon l'une des revendications précédentes, **caractérisée en ce que** le premier capot (2) est le capotage d'une nacelle (18) de l'éolienne (1).

5. Éolienne selon l'une des revendications précédentes, **caractérisée en ce que** le stator (7), notamment la plaque de stator (15), comprend en outre au moins une ouverture de sortie (19, 20), à travers laquelle l'air ayant pénétré dans le stator (7) à partir de l'ouverture d'entrée (9, 10) ou d'au moins une des ouvertures d'entrée (9, 10) peut s'échapper de l'éolienne (1), l'ouverture de sortie (19, 20) respective étant raccordée à un conduit (21, 22) respectif qui s'étend depuis l'ouverture de sortie (19, 20) jusqu'à une surface externe (23) de l'éolienne (1), en particulier jusqu'à une surface externe (23) formée par le premier capot (2).

6. Éolienne selon la revendication 5, **caractérisée en ce que** l'ouverture de sortie (19, 20) est agencée radialement à l'intérieur du deuxième capot (11) ou de la section creuse (33), le conduit (21, 22) respectif s'étendant à travers la zone de pression élevée (3) et étant conçu pour isoler l'air s'écoulant à partir de l'ouverture de sortie (19, 20) respective de l'air présent au sein de la zone de pression élevée (3).

7. Éolienne selon l'une des revendications précédentes, **caractérisée en ce qu'**elle comprend un capot supplémentaire (24) qui est formé par le rotor (8) ou fixé à celui-ci, qui chevauche une section d'extrémité (25) du premier capot (2) dans la direction axiale et qui est agencé radialement à l'extérieur de ladite section d'extrémité (25), la section d'extrémité (25) comprenant l'ouverture de réception (12).

8. Éolienne selon l'une des revendications précédentes, **caractérisée en ce que** le premier capot (2) forme une bride (26) entourant l'ouverture de réception (12).

9. Éolienne selon l'une des revendications précédentes, **caractérisée en ce que** le deuxième capot (11) ou la section creuse (33) passe à travers une ouverture de rotor (27) ménagée dans une paroi latérale axiale (28) du rotor (8), une section axiale (29) du deuxième capot (11) ou de la section creuse (33), située sur le côté de la paroi latérale axiale (28) tourné à l'opposé du stator (7), présentant un diamètre supérieur à celui de l'ouverture de rotor (27).

10. Éolienne selon l'une des revendications précédentes, **caractérisée en ce qu'**une extrémité axiale du stator (7) orientée vers le ou un moyeu (16) portant des pales de rotor (17) de l'éolienne (1) comprend au moins une ouverture supplémentaire (43) permettant à au moins une partie de l'air ayant pénétré dans le stator (7) via l'ouverture d'entrée (9, 10) ou au moins une des ouvertures d'entrée (9, 10) de sortir du stator (7) pour entrer dans un entrefer (41) agencé radialement entre une surface externe du stator (7) et une surface interne du rotor (6).

11. Éolienne selon l'une des revendications précédentes, **caractérisée en ce que** le deuxième capot (11) comprend une ouverture de capot (44), reliant la zone de pression élevée (3) à un espace intérieur du rotor (6) pour permettre à l'air de s'écouler à partir de la zone de pression élevée (3) vers un entrefer (41) agencé radialement entre une surface externe du stator (7) et une surface interne du rotor (6).

12. Éolienne selon la revendication 10 ou 11, **caractérisée en ce que** le stator (7), notamment un corps de stator (49) formant la ou une surface radialement externe du stator (7), comprend au moins une ouverture radiale (47) qui est reliée à l'ouverture de sortie (19, 20) ou à au moins une des ouvertures de sortie (19, 20) pour permettre à l'air de quitter l'entrefer (41) via l'ouverture radiale (47) et l'ouverture de sortie (19, 20).

13. Éolienne selon l'une des revendications précédentes, **caractérisée en ce que** le stator comprend d'une part au moins un moyen de freinage (45), lequel est de préférence monté sur la plaque de stator (15), le moyen de freinage (45) étant conçu pour entrer en contact de friction avec au moins une surface du rotor (6), de préférence d'un disque de frein (38) du rotor, lorsque le moyen de freinage (45) est actionné, et/ou d'autre part au moins un ventilateur (50) pour déplacer l'air à partir de l'ouverture radiale (47) ou d'au moins une des ouvertures radiales (47) vers l'ouverture de sortie (19, 20) ou au moins une des ouvertures de sortie (19, 20).

14. Procédé de construction d'une éolienne (1), comprenant les étapes consistant à :
- fournir un générateur (6) doté d'un stator (7) et d'un rotor externe (8), ainsi qu'un premier capot (2) pourvu d'une ouverture de réception (12), un moyen d'étanchéité (13) constitué par un volet formé d'un matériau élastique, notamment du caoutchouc, étant d'une part fixé au premier capot (2) ou d'autre part fixé à un deuxième capot (11), lui-même fixé au stator (7), ou fixé à une section creuse (33) du stator (7),
- agencer le stator (7) en position fixe par rapport au premier capot (2) en insérant une extrémité ouverte du deuxième capot (11) ou de la section creuse (33) dans une ouverture de réception (12) du premier capot (2), faisant ainsi fléchir élastiquement le volet dans la direction axiale et formant une zone de pression élevée (3) délimitée par le premier capot (2) et soit le deuxième capot (11), soit la section creuse (33),
- monter un moyeu (16) destiné à porter des pales de rotor (17) de l'éolienne (1) sur le rotor (8), et
- monter des pales de rotor (17) sur le moyeu (16).
